# FASCICULE DE BREVET EUROPEEN

(11) **EP 2 493 045 B1**
(45) Date de publication et mention de la délivrance du brevet: **02.10.2019**
(21) Numéro de dépôt: 12156187.2
(22) Date de dépôt: 20.02.2012
(51) Int. Cl.: H02J 3/46, H02M 3/28, H02J 1/10

(54) **Dispositif de conversion d'énergie et procédé de répartition associé**
Vorrichtung zur Energieumwandlung, und entsprechendes Verteilungsverfahren
Energy conversion device and related distribution method

(30) Priorité: 25.02.2011 FR 1151536
(43) Date de publication de la demande: 29.08.2012
(73) Titulaire: Valeo Systèmes de Contrôle Moteur, 95800 Cergy (FR)
(72) Inventeur: Bouchez, Boris, 95800 CERGY (FR); De Sousa, Luis, 95670 ERAGNY SUR OISE (FR)
(74) Mandataire: Argyma

(56) Documents cités:
- FR-A1- 2 783 375
- US-A- 5 905 645
- US-A1- 2004 041 473
- US-B1- 6 252 785

## Description

La présente invention concerne le domaine des convertisseurs d'énergie et plus particulièrement les dispositifs de conversion à convertisseurs multiples et la répartition de la puissance de conversion entre les différents convertisseurs.

Typiquement, un convertisseur fournit une puissance, dite puissance de conversion, pour réaliser la fonction de conversion. En outre, un convertisseur consomme une puissance pour son fonctionnement intrinsèque. Le rendement d'un convertisseur désigne le rapport entre la puissance de conversion et la puissance consommée par le convertisseur.

Dans l'état de la technique, comme montré par le document US-A2004/041473, il est connu d'utiliser des dispositifs de conversion à convertisseurs multiples, dans lesquels un convertisseur de forte puissance est remplacé par une pluralité de convertisseurs de plus faible puissance fonctionnant en parallèle et dont la somme des puissances est équivalente à la forte puissance. Ainsi, lorsque la puissance de conversion est faible certains convertisseurs peuvent être désactivés de manière à économiser leur puissance consommée correspondante.

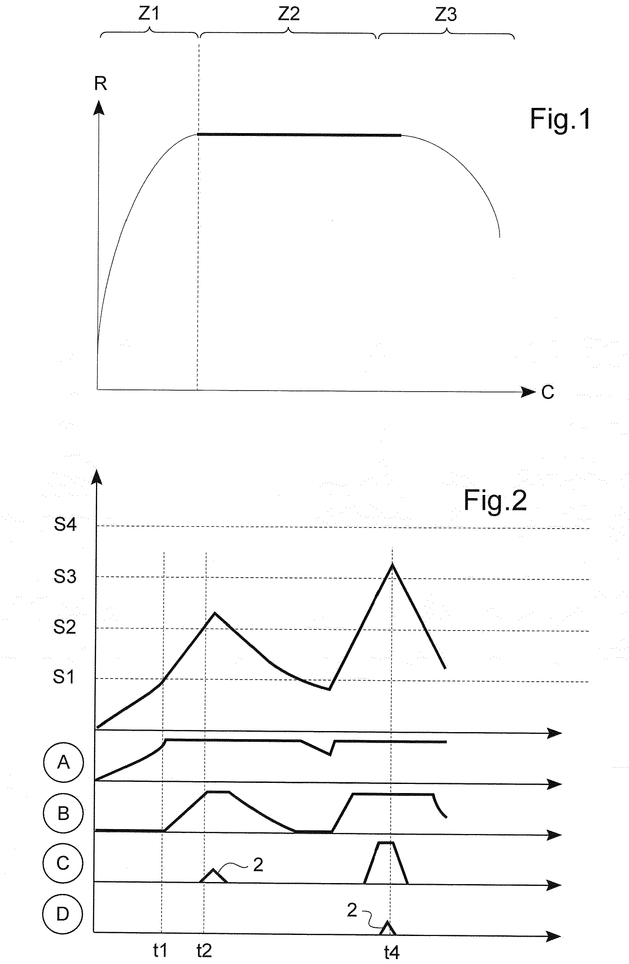

De plus, le rendement R d'un convertisseur en fonction de sa puissance fournie C, comme représenté sur la figure 1, n'est pas constant. Le rendement est faible pour un niveau de puissance fournie faible. Il apparaît donc nécessaire d'éviter de travailler dans la zone de faible puissance Z1 pour laquelle le rendement est faible et favoriser l'utilisation du convertisseur dans les zones nominale Z2 et de forte puissance Z3 où le rendement est important.

Ainsi, l'utilisation de dispositifs de conversion à convertisseurs multiples permet d'éviter d'utiliser un convertisseur de forte puissance dans sa zone à faible rendement lorsque sa puissance de conversion est faible.

Cependant, l'utilisation de dispositifs de conversion à convertisseurs multiples implique la nécessité de gérer la répartition de la puissance totale de conversion entre les différents convertisseurs.

La figure 2 représente un exemple d'évolution d'une puissance de conversion C en fonction du temps t et l'évolution correspondante des puissances fournies respectives des différents convertisseurs dans le cas où un dispositif de conversion comprend quatre convertisseurs. Les puissances des convertisseurs sont représentées par les graphes A, B, C, D. Ainsi, lorsque la puissance totale de conversion augmente, le premier convertisseur (graphe A) est utilisé jusqu'à un premier seuil de puissance S1 (correspondant à la puissance maximale du premier convertisseur) atteint au temps t1. Au delà du seuil S1, le deuxième convertisseur (graphe B) est également utilisé jusqu'à un deuxième seuil S2 (correspondant à la somme des puissances maximales du premier et du deuxième convertisseur) atteint au temps t2. De même des seuils S3 et S4 sont définis pour les troisième et quatrième convertisseurs (graphes C et D). Au temps t4 les quatre convertisseurs sont utilisés puis la puissance de conversion décroît. La puissance de conversion du quatrième convertisseur est alors diminuée, puis la puissance de conversion du troisième convertisseur est diminuée, et ainsi de suite si la puissance de conversion continue à décroître.

Ainsi, avec une telle répartition de puissance le premier convertisseur (graphe A) est quasiment constamment utilisé tandis que le quatrième convertisseur (graphe D) est rarement utilisé. Ce déséquilibre d'utilisation tend à provoquer une usure prématurée du dispositif de conversion due à une usure prématurée du premier convertisseur.

Le but de la présente invention est donc de proposer un procédé de répartition de la puissance totale de conversion entre les convertisseurs d'un dispositif de conversion à convertisseurs multiples permettant d'obtenir une utilisation quasi uniforme des différents convertisseurs. Le but de l'invention est en outre de proposer un procédé simple sans avoir recours à des moyens de mise en oeuvre complexes.

A cet effet, l'invention concerne un procédé de répartition de la puissance totale d'un dispositif de conversion d'énergie entre au moins deux convertisseurs compris dans ledit dispositif de conversion d'énergie, comme défini dans la revendication indépendante 1.

Selon un mode de réalisation, les positions des premier et deuxième curseurs mobiles définis dans la revendication 1 sont ajustées de sorte que :
- lorsque la puissance totale du dispositif de conversion augmente, le premier curseur mobile se déplace dans un sens prédéfini le long de l'anneau de manière proportionnelle à l'augmentation de puissance et,
- lorsque la puissance totale du dispositif de conversion diminue, le deuxième curseur mobile se déplace dans le sens prédéfini le long de l'anneau de manière proportionnelle à la diminution de puissance.

Selon un mode de réalisation, les positions des portions de l'anneau peuvent être déplacées en rotation autour du centre de l'anneau, le déplacement des portions correspondant à une modification de la répartition de puissance entre les différents convertisseurs.

Selon un mode de réalisation, le déplacement en rotation des portions est fonction des caractéristiques de rendement des convertisseurs.

Selon un mode de réalisation, le déplacement en rotation des portions est réalisé de manière permanente.

Selon un mode de réalisation, la vitesse du déplacement en rotation des portions est fonction de la constante de temps thermique des convertisseurs.

Selon un mode de réalisation, la vitesse du déplacement en rotation des portions est augmentée d'une première valeur de vitesse prédéfinie lorsque le rendement de conversion du dispositif de conversion est inférieur à une première valeur de rendement prédéfinie.

Selon un mode de réalisation, la vitesse du déplacement en rotation des portions est réduite d'une deuxième valeur de vitesse prédéfinie lorsque le rendement de conversion du dispositif de conversion est supérieur à une deuxième valeur de rendement prédéfinie.

L'invention concerne en outre un dispositif de conversion d'énergie entre une première et une deuxième entités électriques, le dispositif de conversion d'énergie comprenant au moins deux convertisseurs, comme défini dans la revendication indépendante 9.

Selon un mode de réalisation, lesdits, au moins deux, convertisseurs comprennent :
- une première borne d'entrée reliée d'une part à une première extrémité d'une branche comprenant deux interrupteurs montés en série et d'autre part à une première borne de sortie, et
- une deuxième borne d'entrée reliée au point milieu de la branche par l'intermédiaire d'un élément inductif, la deuxième extrémité de la branche correspondant à une deuxième borne de sortie,
les premières bornes d'entrée des convertisseurs étant reliées entre elles, les deuxièmes bornes d'entrée des convertisseurs étant reliées entre elles, les premières bornes de sortie des convertisseurs étant reliées entre elles, et les deuxièmes bornes de sortie des convertisseurs étant également reliées entre elles.

Selon un mode de réalisation, les interrupteurs des convertisseurs comprennent un transistor monté en parallèle avec une diode.

D'autres caractéristiques et avantages de l'invention apparaîtront dans la description qui va maintenant en être faite, en référence aux dessins annexés qui en représentent, à titre indicatif mais non limitatif, un mode de réalisation possible.

Sur ces dessins, les mêmes numéros de référence représentent les mêmes éléments :
- la figure 1 représente un graphique d'une caractéristique du rendement d'un convertisseur en fonction de la puissance de conversion;
- la figure 2 représente un graphique d'un exemple d'évolution d'une puissance de conversion au cours du temps et de la répartition correspondante de la puissance entre les différents convertisseurs d'un dispositif de conversion à convertisseurs multiples;
- la figure 3 représente un schéma électrique d'un convertisseur;
- la figure 4 représente un schéma électrique d'un dispositif de conversion comprenant deux convertisseurs montés en parallèle;
- la figure 5 représente un schéma d'un anneau de puissance selon la présente invention;
- la figure 6 représente un premier exemple d'une évolution de puissance au cours du temps et de l'application de l'anneau de puissance de la figure 5 en fonction de cette évolution;
- la figure 7 représente un deuxième exemple d'une évolution de puissance au cours du temps et de l'application de l'anneau de puissance de la figure 5 en fonction de cette évolution;
- la figure 8 représente un premier exemple de transfert de puissance au niveau d'un anneau de puissance tel que décrit sur la figure 5;
- la figure 9 représente un deuxième exemple de transfert de puissance au niveau d'un anneau de puissance tel que décrit sur la figure 5;
- la figure 10 représente un exemple d'évolution de puissance et de température d'un convertisseur au cours du temps pour deux configurations différentes;

Dans la description qui va suivre, on désigne de façon générale:
Le terme « transistor bipolaire à grille isolée » (« insulated gate bipolar transistor (IGBT) » en anglais) correspond à un transistor hybride, regroupant un transistor à effet de champ à grille métal-oxyde (« metal-oxyd semiconductor field effect transistor (MOSFET) » en anglais) en entrée et un transistor bipolaire en sortie.

Le terme « suite périodique de période n » désigne une suite de termes xᵢ tels que le terme d'indice i et d'indice n+i sont identiques.

Autrement dit, le terme « suite périodique de période n » correspond à une « suite ordonnée et bouclée ». Le terme « suite ordonnée et bouclée » appliqué à une pluralité d'éléments correspond à ordonner les éléments d'un premier à un dernier élément dans une boucle, chaque élément n'apparaissant qu'une seule fois dans la boucle, de sorte que l'élément suivant le dernier élément correspond au premier élément (et implicitement l'élément précédent le premier élément correspond au dernier élément). Dans le cas où l'on a trois éléments notés 1, 2 et 3, deux suites ordonnées en boucle fermée sont possibles:
- la suite correspondant à la boucle 1-2-3 (correspondant aux boucles 2-3-1 et 3-1-2) d'une part et,
- la suite correspondant à la boucle 1-3-2 (correspondant aux boucles 3-2-1 et 2-1-3) d'autre part.

Les modes de réalisation de la présente invention concernent la répartition de la puissance totale de conversion entre les convertisseurs d'un dispositif de conversion d'énergie à convertisseurs multiples, c'est-à-dire comprenant plusieurs convertisseurs.

Le dispositif de conversion permet de convertir l'énergie reçue sous une première forme d'une première entité électrique en une deuxième forme d'énergie transmise à une deuxième entité électrique. La première entité électrique est par exemple une source de tension telle que des moyens d'accumulation. La deuxième entité électrique est par exemple un dispositif destiné à alimenter un moteur électrique pour entraîner un véhicule automobile, tel qu'un circuit électrique de commande d'un moteur électrique. Dans ce cas, les deux formes d'énergie sont deux tensions continues ayant respectivement une première et une deuxième amplitude.

Cependant, la portée des modes de réalisation de la présente invention ne se limite pas à ces exemples d'entités électriques ni aux exemples de convertisseurs décrits dans la suite de la description. L'invention s'applique à tous les convertisseurs d'énergie reliant deux entités électriques.

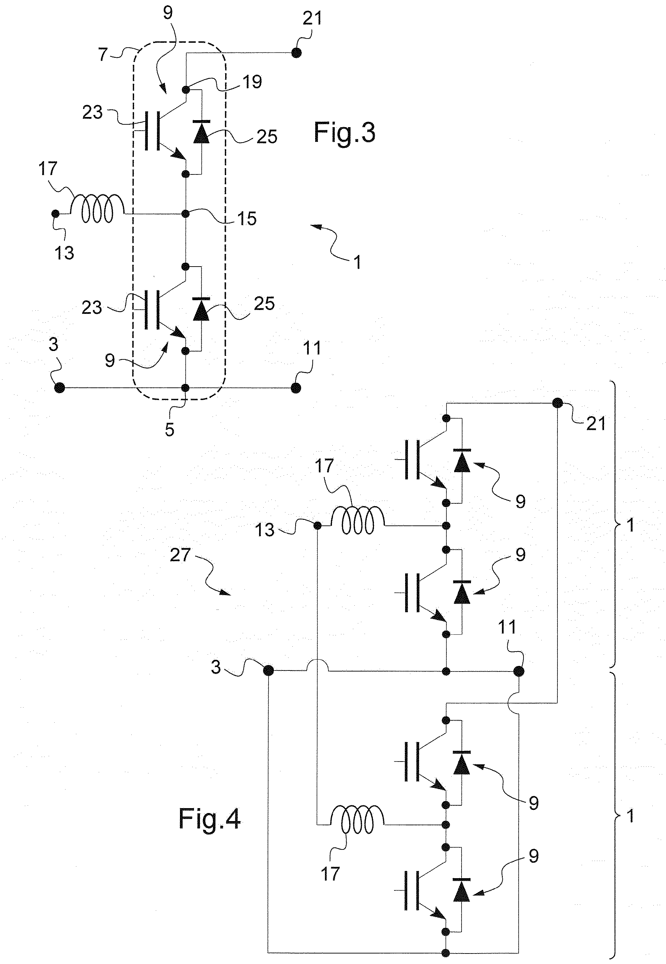

La figure 3 représente un exemple de convertisseur 1 comprenant:
- une première borne d'entrée 3 reliée d'une part à une première extrémité 5 d'une branche 7 comprenant deux interrupteurs 9 montés en série et d'autre part à une première borne de sortie 11, et
- une deuxième borne d'entrée 13 reliée au point milieu 15 de la branche 7 (correspondant à un point situé entre les deux interrupteurs 9) par l'intermédiaire d'un élément inductif 17, la deuxième extrémité 19 de la branche étant reliée à une deuxième borne de sortie 21.

Les interrupteurs 9 sont constitués d'un transistor 23 généralement de type IGBT monté en parallèle avec une diode 25 ce qui permet d'obtenir un convertisseur réversible. Ainsi, la conversion peut se faire aussi bien depuis les bornes d'entrée 3 et 13 vers les bornes de sortie 11 et 21 que l'inverse. Lorsque la conversion est réalisée depuis les bornes d'entrée 3 et 13 vers les bornes de sortie 11 et 21, le convertisseur correspond à un circuit élévateur. Lorsque la conversion est réalisée depuis les bornes de sortie 11 et 21 vers les bornes d'entrée 3 et 13, le convertisseur correspond à un circuit abaisseur.

La figure 4 représente un dispositif de conversion 27 comprenant deux convertisseurs tels que décrits sur la figure 3 montés en parallèle. La mise en parallèle consiste à relier:
- les premières bornes d'entrée 3 entre elles,
- les deuxièmes bornes d'entrée 13 entre elles,
- les premières bornes de sortie 11 entre elles, et
- les deuxièmes bornes de sortie 21 entre elles.

Le dispositif de conversion 27 comporte donc deux bornes de sortie 11 et 21 et deux bornes d'entrée 3 et 13 comme dans le cas d'un convertisseur unique.

En reliant, de la même manière, les bornes d'entrée et de sortie des convertisseurs 1, un nombre quelconque de convertisseurs 1 peuvent être mis en parallèle. Les convertisseurs 1 forment ainsi un dispositif de conversion 27. La puissance totale du dispositif de conversion 27 est égale à la somme des puissances de conversion des convertisseurs 1. Ainsi, un grand nombre de convertisseurs 1 de puissance faible, c'est-à-dire pouvant transmettre une puissance faible, peuvent remplacer un convertisseur de grande puissance, c'est-à-dire pouvant transmettre une puissance élevée.

La mise en parallèle des convertisseurs 1 permet d'utiliser certains convertisseurs 1 alors que les autres sont désactivés. Par exemple, en cas de faible puissance totale de conversion, certains convertisseurs 1 peuvent être désactivés afin d'économiser de l'énergie et donc d'optimiser le rendement global du dispositif de conversion 27. Ainsi, lorsqu'un convertisseur n'est plus sollicité (c'est à dire que sa puissance de conversion est nulle), il est désactivé de sorte que sa puissance consommée est nulle.

Dans le cas de convertisseurs 1 tels que décrits sur la figure 4, cette désactivation peut être réalisée en laissant les interrupteurs 9 du convertisseur 1 correspondant ouverts.

Par ailleurs, afin d'éviter un déséquilibre au cours du temps dans l'utilisation des convertisseurs et permettre une usure uniforme des différents convertisseurs, les modes de réalisation de la présente invention décrivent l'application, par une unité de traitement, d'un « roulement » ou permutation concernant l'utilisation des différents convertisseurs.

Afin d'appliquer ce roulement, à chaque convertisseur 1 correspond un terme dans une suite périodique de période n. La période n de la suite périodique est le nombre de convertisseurs 1 dans le dispositif de conversion 27.

Ainsi, on permute de manière progressive l'utilisation des convertisseurs suivant la suite périodique. Ceci permet d'équilibrer la puissance de conversion des convertisseurs 1 au cours du temps.

Lors de la première utilisation du dispositif de conversion (ou à chaque démarrage du dispositif de conversion), un processus d'initialisation désigne, de manière prédéfinie ou aléatoire, un convertisseur comme étant actif. Le convertisseur désigné commence à fournir la puissance du dispositif de conversion 27.

Une fois que le processus d'initialisation est réalisé et que l'un des convertisseurs est activé, selon un mode de réalisation de la présente invention, la répartition de la puissance s'applique alors de la façon suivante.

Lorsque la puissance totale du dispositif de conversion 27 augmente, l'augmentation est appliquée au convertisseur 1 activé en dernier parmi ceux qui sont actifs. Autrement dit, la puissance de conversion du convertisseur 1 activé en dernier augmente en correspondance avec l'augmentation de la puissance totale du dispositif de conversion 27.

Lorsque la puissance totale du dispositif de conversion 27 augmente et que la puissance de conversion du convertisseur 1 activé en dernier parmi ceux qui sont actifs atteint un premier seuil prédéterminé, l'augmentation de la puissance totale du dispositif de conversion 27 est appliquée au convertisseur 1 suivant dans la suite périodique. S'il est inactif, le convertisseur 1 suivant dans la suite périodique est activé.

Par exemple, les valeurs des premiers seuils prédéterminés sont définies de manière à optimiser le rendement des convertisseurs.

Par exemple, le premier seuil prédéterminé d'un convertisseur 1 correspond au niveau de puissance maximal pouvant être fournie par le convertisseur. Ainsi, le dispositif de conversion 27 fournit une puissance maximale lorsque l'ensemble des convertisseurs 1 sont activés à un niveau de puissance égal à leurs seuils prédéterminés respectifs.

Lorsque la puissance totale du dispositif de conversion 27 diminue, on applique la diminution sur le convertisseur 1 ayant été activé en premier parmi ceux qui sont actifs.

Lorsque le convertisseur ayant été activé en premier parmi ceux qui sont actifs n'est plus sollicité (c'est à dire que sa puissance de conversion est nulle), il est désactivé. En désactivant un convertisseur, la puissance consommée par ce convertisseur devient nulle. Ainsi, l'énergie consommée par le dispositif de conversion 27 est économisée. Le convertisseur suivant selon la suite périodique devient alors le convertisseur ayant été activé en premier parmi ceux qui sont actifs. Une diminution ultérieure de puissance s'appliquera alors à ce convertisseur.

De plus, selon un mode de réalisation, afin d'éviter d'utiliser toujours le même convertisseur lors d'un cycle de fonctionnement du dispositif de conversion pendant lequel les variations de puissance sont faibles pendant une longue période, on peut déterminer une puissance de conversion cumulée dans le temps depuis son activation, c'est-à-dire l'énergie fournie par le convertisseur depuis son activation. Ainsi, lorsqu'un seul convertisseur est actif et que la puissance de conversion cumulée dans le temps de ce convertisseur, depuis son activation, correspond à un deuxième seuil prédéterminé, on active le convertisseur suivant selon la suite périodique. Ainsi, en cas d'augmentation de la puissance totale de conversion du dispositif, cette puissance s'accumulera à la puissance de conversion du convertisseur nouvellement activé (en cas de réduction de la puissance totale de conversion du dispositif de conversion, cette réduction de puissance s'appliquera à la puissance de conversion du convertisseur activé en premier parmi les convertisseurs actifs).

Ce deuxième seuil prédéterminé est, par exemple, déterminé à partir de la constante de temps thermique du convertisseur. Ainsi, un échauffement excessif du convertisseur 1 est évité.

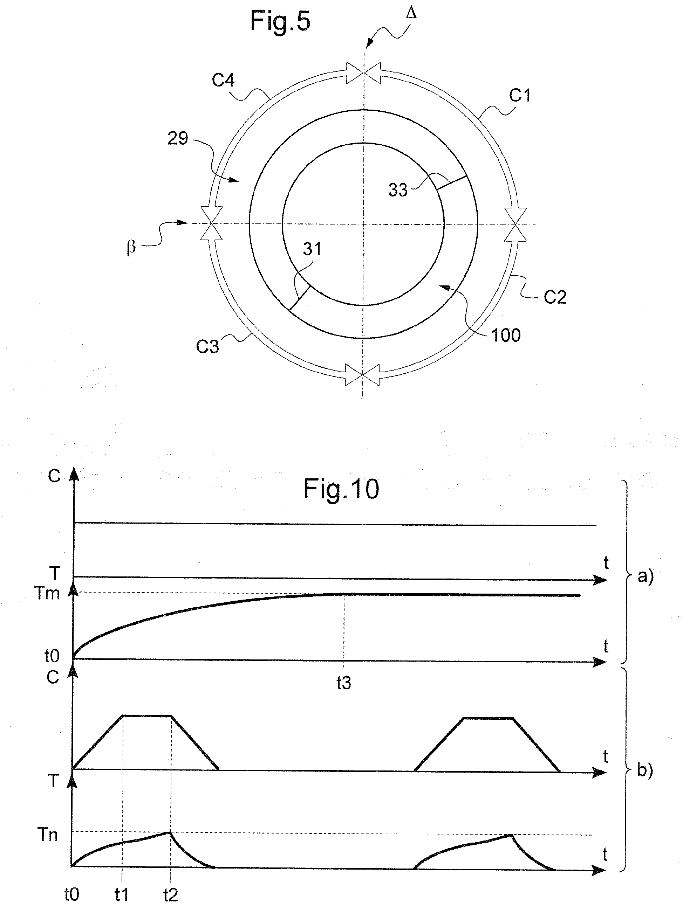

La répartition de puissance peut être représentée de manière simple à l'aide d'un anneau géométrique appelé dans ce qui suit anneau de puissance. Une représentation d'un tel anneau 29 est donnée sur la figure 5 dans le cas de quatre convertisseurs de même puissance montés en parallèle. Les différents convertisseurs correspondent à une portion de l'anneau 29. L'ensemble des portions correspond à l'anneau 29 complet. Les portions sont proportionnelles au premier seuil de puissance des convertisseurs respectifs. Dans l'exemple présenté en figure 5, les quatre convertisseurs 1 ont une même valeur de premier seuil prédéterminé, de sorte que les différentes portions sont de taille égale. Dans un exemple particulier, le premier seuil de puissance correspond à la puissance maximale pouvant être fournie par un convertisseur.

Si, par exemple, chaque convertisseur à une puissance de 10kW, un quart d'anneau équivaut à 10kW et l'anneau complet correspond à 40kW. Ainsi, lorsque la puissance est de 15kW, seuls deux convertisseurs sont nécessaires et les deux autres peuvent être désactivés.

Sur la figure 5, l'anneau de puissance 29 est divisé en quatre portions, délimitées par un axe vertical Δ et un axe horizontal β. Les portions sont des quarts d'anneau notés respectivement C1, C2, C3 et C4. Dans la suite de la description les convertisseurs correspondants seront aussi désignés par C1, C2, C3 et C4.

De plus l'anneau 29 comprend un premier 31 et un deuxième 33 curseurs mobiles le long de l'anneau 29 et définissant la répartition de puissance entre les quatre convertisseurs. La puissance totale du dispositif de conversion 27 correspond à un arc 100 de l'anneau 29 compris entre les positions du premier 31 et du deuxième 33 curseurs mobiles le long de l'anneau 29.

Ainsi, les positions du premier 31 et du deuxième 33 curseurs mobiles sont définies de sorte que lorsque la puissance totale du dispositif de conversion 27 augmente, le premier curseur mobile 31 se déplace dans un sens prédéfini le long de l'anneau 29, de manière proportionnelle à l'augmentation de puissance.

Lorsque la puissance totale du dispositif de conversion 27 diminue, le deuxième curseur mobile 33 se déplace dans le même sens prédéfini le long de l'anneau 29 de manière proportionnelle à la diminution de puissance.

Ainsi, les positions des curseurs 31, 33 définissent la répartition de puissance des convertisseurs 1 du dispositif de conversion 27.

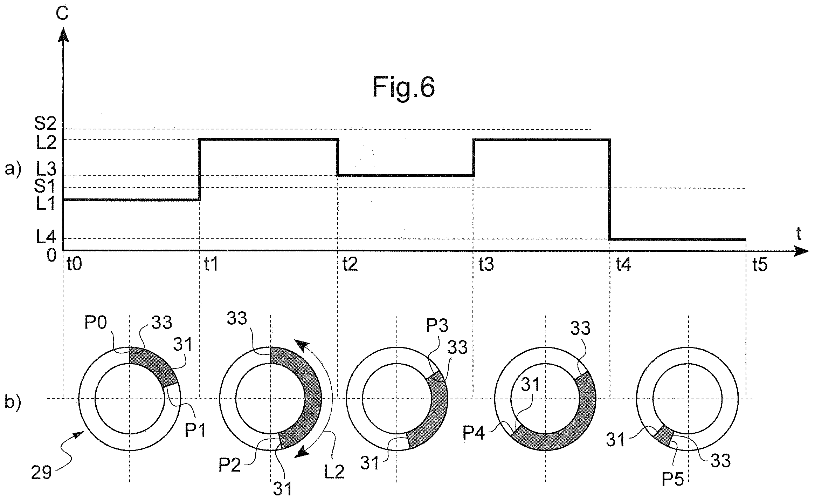

Par exemple, le sens prédéfini est le sens des aiguilles d'une montre. Afin de mieux comprendre le fonctionnement de l'anneau de puissance 29, un exemple d'évolution de la répartition de la puissance au cours du temps va maintenant être décrit en relation avec la figure 6.

La figure 6 comporte deux parties a), b). La partie haute a) représente l'évolution de la puissance totale du dispositif de conversion 27 en fonction du temps t. La partie basse b) représente l'évolution des positions correspondantes du premier 31 et du deuxième 33 curseurs le long de l'anneau 29.

Initialement, les deux curseurs 31 et 33 sont positionnés au même endroit sur l'anneau 29, à un point intermédiaire entre deux portions de l'anneau 29. Par exemple les deux curseurs 31 et 33 sont positionnés à l'emplacement P0 si le convertisseur C1 a été désigné lors du processus d'initialisation.

Juste après le temps t0, la puissance totale du dispositif 27 augmente jusqu'à un premier niveau de puissance L1, le premier curseur 31 se déplace alors le long de l'anneau 29 sur une longueur proportionnelle au premier niveau de puissance L1 pour atteindre la position P1. Le parcours du premier curseur 31 est intégralement compris dans la portion du convertisseur C1. L'augmentation de puissance est donc supportée uniquement par le premier convertisseur C1 de sorte que seul ce premier convertisseur est actif. La puissance étant constante entre les temps t0 et t1, le premier curseur 31 reste à la position P1.

Juste après le temps t1, la puissance totale du dispositif 27 augmente jusqu'à un second niveau de puissance L2. Le premier curseur 31 est déplacé le long de l'anneau 29 sur une longueur proportionnelle à l'augmentation de puissance L2-L1 du dispositif 27. Le premier curseur 31 atteint la position P2 qui se trouve sur la portion correspondant au convertisseur C2. L'augmentation de puissance L2-L1 du dispositif 27 est donc supportée par le premier convertisseur C1 puis par le deuxième convertisseur C2. Ainsi, au temps t2, les deux convertisseurs C1, C2 sont actifs.

Juste après le temps t2, le niveau de puissance du dispositif 27 diminue jusqu'au niveau L3. Le deuxième curseur 33 est déplacé le long de l'anneau 29 sur une longueur proportionnelle à la diminution de puissance L2-L3. Le deuxième curseur 33 se déplace de la position P0 à la position P3. Les positions P0 et P3 sont sur la portion correspondant au convertisseur C1. La diminution de puissance est donc appliquée au premier convertisseur C1 (qui correspond au convertisseur ayant été activé en premier parmi les convertisseurs actifs). Ainsi, au temps t3 les deux convertisseurs C1, C2 sont actifs.

Juste après le temps t3, le niveau de puissance du dispositif 27 repasse à un niveau L2. Le premier curseur 31 est déplacé le long de l'anneau 29 sur une longueur proportionnelle à l'augmentation de puissance L2-L3. Le premier curseur 31 est déplacé de la position P3 à la position P4 qui se trouve sur la portion correspondant au convertisseur C3. L'augmentation de puissance L2-L3 du dispositif 27 est donc supportée par le second convertisseur C2 puis par le troisième convertisseur C3. Ainsi, au temps t4 les trois convertisseurs C1, C2, C3 sont actifs.

Juste après le temps t4, le niveau de puissance diminue jusqu'à un niveau L4. Le deuxième curseur 33 est déplacé le long de l'anneau 29 sur une longueur proportionnelle à la diminution de puissance L2-L4. Le deuxième curseur 33 est déplacé de la position P3 à la position P5 qui se trouve sur la portion correspondant au convertisseur C3. Ainsi, au temps t5, le premier convertisseur C1 et le deuxième convertisseur C2 sont inactifs ; seul le convertisseur C3 est actif.

En conséquence, l'application d'un tel mode de réalisation permet de répartir la puissance totale de conversion sur tous les convertisseurs au cours des cycles d'augmentation et de diminution de puissance, même lorsque la puissance totale de conversion instantanée est faible.

D'autre part, comme décrit précédemment, le dispositif de conversion 27 est réversible et peut ainsi fonctionner dans les deux sens, d'une première vers une deuxième entité électrique ou de la deuxième vers la première entité électrique.

En reprenant le cas où les entités électriques connectées au dispositif de conversion correspondent respectivement à des moyens d'accumulation et un circuit électrique de commande d'un moteur électrique destiné à entraîner un véhicule automobile, le premier sens de conversion correspond à l'alimentation du moteur par les moyens d'accumulation tandis que le sens opposé correspond à un freinage régénératif permettant de recharger les moyens d'accumulation. La répartition de puissance entre les différents convertisseurs se fait alors de la même manière dans les deux sens de transfert de puissance.

La puissance de conversion en sens opposé peut être considérée comme une puissance « négative ». Autrement dit, une puissance négative correspond à un transfert de puissance de la deuxième vers la première entité électrique. Cependant les déplacements des premier 31 et deuxième 33 curseurs sont identiques à ceux décrits précédemment.

Ainsi, au niveau de l'anneau de puissance 29 :
- lorsque la puissance « négative » augmente en valeur absolue, c'est-à-dire la puissance totale du dispositif de conversion devient de plus en plus négative, le deuxième curseur 33 se déplace dans le sens prédéfini précédemment et,
- lorsque la puissance «négative» diminue en valeur absolue, c'est-à-dire la puissance totale du dispositif de conversion devient de moins en moins négative, le premier curseur 31 se déplace dans le sens prédéfini précédemment.

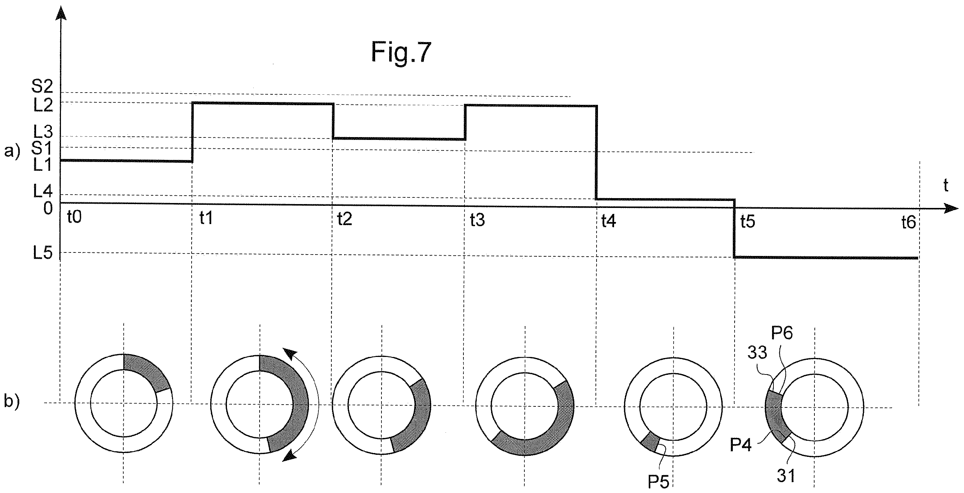

Ceci sera mieux compris en faisant référence à la figure 7. La figure 7 correspond à la figure 6 à laquelle un cycle de conversion correspondant à l'intervalle de temps entre t5 et t6 a été ajouté. Ce cycle correspond à un cycle où la puissance totale du dispositif de conversion 27 est négative et correspond à un niveau L5.

Au temps t5, la puissance diminue jusqu'à être nulle. Sur l'anneau 29, ceci correspond à une superposition (non représentée) des positions des premier 31 et deuxième 33 curseurs.

Ensuite, la puissance totale du dispositif de conversion 27 devient négative, indiquant que le transfert de puissance s'effectue de la deuxième entité vers la première entité. La puissance totale de conversion diminue jusqu'à un niveau L5. Le deuxième curseur 33 passe alors de la position P5 à la position P6. Ainsi, le deuxième curseur 33 se retrouve «devant» le premier curseur 31, la portion située «entre» les deux curseurs 33 et 31 correspondant à la puissance « négative ».

Ainsi, l'utilisation des deux curseurs 31 et 33 permet de gérer la répartition de puissance dans les deux sens de conversion.

Cependant, en appliquant la répartition de puissance décrite dans les modes de réalisation précédents, certains convertisseurs 1 peuvent être utilisés dans leur zone de faible puissance de sorte que le rendement global n'est pas optimal et peut encore être optimisé.

En reprenant la figure 2, les puissances de conversion désignées par la référence 2 correspondent à un faible rendement du convertisseur 1 comme décrit dans la zone Z1 de la figure 1.

Afin d'éviter une telle situation, selon un mode de réalisation de la présente invention, on réalise, en fonction des caractéristiques de rendement des convertisseurs 1, une répartition de la puissance totale du dispositif de conversion 27 de manière à optimiser le rendement de conversion entre les convertisseurs 1.

Ainsi, notamment lorsque la puissance est constante, si plusieurs convertisseurs 1 sont activés, une permutation progressive (ou transfert de puissance), entre le convertisseur 1 ayant été activé en dernier et le convertisseur 1 ayant été activé en premier parmi les convertisseurs actifs est réalisée de manière à obtenir une répartition de puissance correspondant à un rendement de conversion optimisé du dispositif de conversion 27.

En effet, en connaissant la caractéristique du rendement en fonction de la puissance de conversion pour un convertisseur 1 (comme décrit sur la figure 1), une répartition de puissance optimale en fonction de la puissance peut être déduite ou déterminée pour un dispositif de conversion 27 comprenant un ensemble de convertisseurs 1.

Néanmoins, afin de simplifier la réalisation d'une telle répartition et du fait qu'un convertisseur utilisé à son maximum de puissance de conversion présente un bon rendement, le présent mode de réalisation consiste à optimiser la répartition des convertisseurs 1 partiellement utilisés, c'est à dire, le convertisseur 1 ayant été activé en dernier et le convertisseur 1 ayant été activé en premier parmi les convertisseurs 1 actifs (les autres convertisseurs étant utilisés à pleine puissance ou inactifs).

Au niveau de l'anneau de puissance 29, une telle répartition de puissance est représentée par un déplacement en rotation des portions de l'anneau de puissance 29.

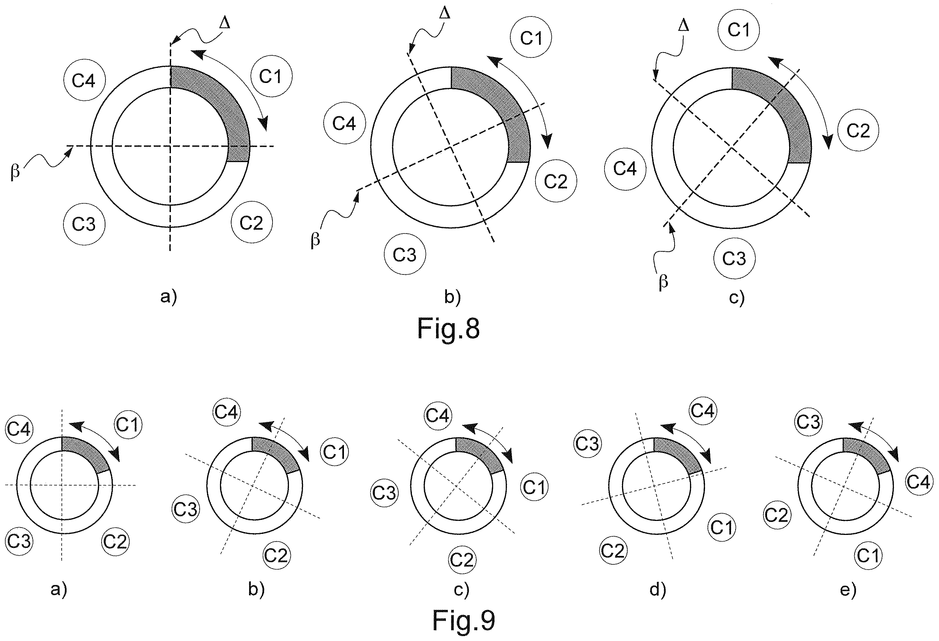

La figure 8 représente trois configurations de l'anneau de puissance 29, décrit précédemment sur la figure 5, correspondant à trois étapes ou instants de la réalisation d'une telle optimisation.

La première partie a) de la figure 8 représente un exemple de répartition de puissance pour laquelle un premier convertisseur C1 est utilisé à pleine puissance et un deuxième convertisseur C2 est utilisé à faible puissance (ce qui correspond à un faible rendement du convertisseur C2). La puissance du dispositif de conversion 27 reste constante au cours du temps.

Un transfert de puissance est réalisé du premier convertisseur C1 vers le deuxième convertisseur C2. Le transfert est représenté au niveau de l'anneau 29 par une rotation des portions autour du centre de l'anneau 29.

La partie b) de la figure 8 représente une étape intermédiaire d'un tel transfert de puissance. Il est à noter que le transfert de puissance peut également se faire vers le convertisseur C4. Dans ce cas la rotation des portions se fera dans le sens opposé. Les portions sont mises en rotation pour obtenir une répartition de puissance correspondant à un rendement optimisé. Le rendement optimisé peut, par exemple, être déterminé à partir d'une caractéristique représentant le rendement du convertisseur 1 en fonction de la puissance de conversion, et établie par le constructeur du dispositif de conversion 27 et enregistrée dans une mémoire du dispositif de conversion 27.

Ainsi, dans le présent exemple, la répartition optimale (correspondant à un rendement optimisé du dispositif de conversion 27) correspond à une répartition égale de la puissance totale du dispositif de conversion 27 entre les deux convertisseurs C1 et C2 comme représentée par la position des axes sur la partie c) de la figure 8.

Par ailleurs, en cas de puissance totale du dispositif de conversion 27 constante pendant une longue durée, les mêmes convertisseurs 1 sont utilisés pendant cette longue durée ce qui peut provoquer notamment leur échauffement et par conséquent leur usure prématurée. Afin d'éviter un tel échauffement, selon un mode de réalisation de la présente invention, on commande une permutation progressive permanente d'activation des convertisseurs 1 selon la suite périodique de sorte que:
- lorsqu'un seul convertisseur est activé, on réalise un transfert de puissance, du convertisseur actif vers le convertisseur suivant dans la suite périodique (en appliquant cette condition, un deuxième convertisseur se retrouve actif de sorte qu'on se retrouve dans le cas de figure suivant).
- lorsque plusieurs convertisseurs sont activés, on réalise un transfert de puissance, du convertisseur ayant été activé en premier parmi les convertisseurs actifs vers le convertisseur ayant été activé en dernier.

L'application de ce mode de réalisation permet donc de transférer de manière permanente la puissance de conversion successivement vers tous les convertisseurs 1. Ce transfert peut être effectué lorsque la puissance totale du dispositif de conversion 27 est constante ou de manière permanente quelle que soit l'évolution de la puissance totale du dispositif de conversion 27.

De plus, il est à noter que le transfert de puissance peut également se faire vers les convertisseurs précédents.

Au niveau de l'anneau de puissance 29, le transfert de puissance est représenté par un déplacement en rotation permanent des portions de l'anneau 29 (le sens de rotation définit alors le sens du transfert (vers les convertisseurs précédents ou vers les convertisseurs suivants dans la suite périodique).

Cependant, selon un mode de réalisation alternatif, ce déplacement en rotation des portions de l'anneau 29 peut se faire de manière périodique, l'amplitude et la période de rotation étant alors prédéfinies en fonction des caractéristiques et notamment la constante de temps thermique des convertisseurs.

La figure 9 représente l'évolution de la répartition de puissance au cours du temps à cinq instants différents lors de l'application de ce mode de réalisation. Dans l'exemple de la figure 9, la puissance totale du dispositif de connexion 27 reste constante pour les cinq instants et le transfert de puissance se fait vers les convertisseurs 1 précédents selon la suite périodique.

A un premier instant (partie a)), la puissance totale du dispositif de conversion 27 est intégralement répartie sur le premier convertisseur C1. A un deuxième instant (partie b)), une partie de la puissance a été transférée du premier convertisseur C1 vers le quatrième convertisseur C4. A un troisième instant (partie c)), la puissance est également répartie entre le premier convertisseur C1 et le quatrième convertisseur C4. A un quatrième instant (partie d)), la puissance est intégralement répartie sur le quatrième convertisseur C4. A un cinquième instant (partie e)), une partie de la puissance a été transférée du quatrième convertisseur C4 vers le troisième convertisseur C3.

La puissance est ainsi transférée, de manière permanente d'un convertisseur 1 vers le suivant selon la suite périodique de manière à obtenir une utilisation quasi uniforme des convertisseurs 1 au cours du temps.

Ainsi, en appliquant une rotation permanente des portions (correspondant à un transfert permanent vers les convertisseurs précédents (ou suivants)), on obtient également une répartition de puissance sur l'ensemble des convertisseurs au cours du temps quelque soit l'évolution de la puissance.

Une permutation progressive permanente (ou transfert) de puissance d'un convertisseur 1 vers le suivant vient d'être décrite mais la vitesse de cette permutation n'a pas été évoquée.

Selon un mode de réalisation de la présente invention, la vitesse de permutation est déterminée en fonction de la constante de temps thermique des convertisseurs 1 de manière à limiter l'échauffement des convertisseurs 1.

La figure 10 représente un exemple d'évolution de la puissance de conversion C et de la température T d'un convertisseur 1 au cours du temps t dans le cas d'une utilisation intensive (partie a) et dans le cas d'une utilisation intermittente (partie b).

Dans le cas d'une utilisation intensive (partie a), ce qui arrive couramment avec une répartition de puissance selon l'art antérieur tel que décrit sur la figure 2, la puissance de conversion est constante et correspond à la puissance maximale du convertisseur 1. La température augmente progressivement à partir du temps t0 jusqu'à tendre vers un palier de température Tm au temps t3. La température Tm correspondant à ce palier est élevée ce qui peut être nuisible au fonctionnement du dispositif de conversion 27.

Dans le cas d'une utilisation intermittente (partie b), ce qui arrive en appliquant une permutation permanente telle que décrite précédemment, lorsque le dispositif de conversion 27 n'est pas utilisé à pleine puissance, la puissance augmente progressivement à partir de t0 puis atteint un palier au temps t2 correspondant à la puissance de conversion maximale du convertisseur 1. Le palier s'étend jusqu'au temps t2. La puissance diminue alors progressivement, le cycle se répète lorsque l'ensemble des convertisseurs 1 ont été utilisés au cours de la permutation (ou « roulement ») selon la suite périodique.

Dans ce cas, la température augmente progressivement, mais de manière moins rapide que dans la partie a) puisque la puissance est moindre, entre t0 et t1, puis continue à augmenter jusqu'à t2 pour atteindre une température maximale Tn au temps t2 puis redescend progressivement lorsque la puissance diminue. La température Tn obtenue est inférieure à la température Tm puisque la pleine puissance n'est appliquée que pendant un temps limité, ce qui permet d'éviter un échauffement trop important des convertisseurs 1.

L'évolution de la température du convertisseur 1 au cours du temps en fonction de la puissance de conversion étant dépendante de la constante de temps thermique du convertisseur 1, la vitesse de transfert est donc déterminée par rapport à cette constante de temps pour limiter l'échauffement de manière optimisée. Au niveau de l'anneau de puissance 29, la vitesse de permutation (ou vitesse de transfert) est représentée par la vitesse de déplacement en rotation des portions autour du centre de l'anneau 29.

Par ailleurs, la vitesse de transfert peut être uniforme mais peut également être modulée en fonction d'un paramètre afin d'améliorer le rendement global du dispositif de conversion 27. Comme décrit précédemment sur la figure 8, certaines répartitions de puissance correspondent à un rendement du dispositif de conversion 27 qui n'est pas optimisé tandis que certaines répartitions de puissance correspondent à un rendement optimisé du dispositif de conversion 27. Or, lors de l'application d'une permutation permanente, on a une succession de configurations correspondant à des rendements non optimisés puis des rendements optimisés. Afin d'améliorer le rendement du dispositif 27, selon un mode de réalisation de la présente invention, la vitesse de transfert de puissance est donc modulée de sorte que:
- on augmente la vitesse de permutation progressive permanente d'une première valeur de vitesse prédéterminée lorsque le rendement de conversion est inférieur à une première valeur de rendement prédéterminée et,
- on réduit la vitesse de permutation progressive permanente d'une deuxième valeur de vitesse prédéterminée lorsque le rendement de conversion est supérieur à une deuxième valeur de rendement prédéterminée.

Les première et deuxième valeurs de vitesse prédéterminées sont établies en fonction des caractéristiques des convertisseurs 1 et notamment leur constante de temps thermique. Les première et deuxième valeurs de rendement prédéterminées sont établies en fonction d'une caractéristique représentant le rendement des convertisseurs 1 en fonction de la puissance de conversion.

La première et la deuxième valeurs de rendement peuvent être égales. Il en est de même pour les première et deuxième valeurs de vitesse prédéterminées.

Cette modulation revient à réduire le temps passé sur des configurations de répartition de puissance pour lesquelles le rendement n'est pas optimisé et à augmenter le temps passé sur des configurations de répartition de puissance pour lesquelles le rendement est optimisé.

Au niveau de l'anneau de puissance 29, la variation de la vitesse de permutation est représentée par la variation de la vitesse de rotation des portions autour de l'anneau 29.

Ainsi, en appliquant une permutation progressive sur un dispositif de conversion 27 comprenant une pluralité de convertisseurs montés en parallèle, les modes de réalisation de la présente invention permettent d'utiliser l'ensemble des convertisseurs du dispositif de manière quasi-uniforme au cours du temps, quelle que soit la puissance totale de conversion du dispositif de conversion 27. De plus, en réalisant une permutation permanente de puissance entre les convertisseurs 1, les modes de réalisation de la présente invention permettent de limiter l'échauffement au niveau des convertisseurs 1.

Enfin, l'utilisation d'un anneau de puissance 29 permet de gérer de manière simple la répartition de la puissance entre les convertisseurs 1 selon les modes de réalisation de la présente invention.

En effet, il n'est pas nécessaire de stocker en temps réel les durées d'utilisation ou les puissances consommées respectives des convertisseurs 1 pour uniformiser leurs durées de vie ou répartir la puissance entre eux. Lorsque la puissance totale de conversion varie, les déplacements des premier 31 et second 33 curseurs assurent que statistiquement sur une période d'utilisation du dispositif de conversion 27, les convertisseurs 1 sont utilisés pendant des durées sensiblement identiques. Ceci même lorsque la puissance totale de conversion instantanée reste inférieure à la puissance fournie par un convertisseur 1.

Le procédé permet également d'optimiser la répartition de puissance entre les convertisseurs 1 tout en fournissant une puissance de conversion continue. En effet, dans les procédés de l'art antérieur, lorsque la puissance totale de conversion est inférieure à un seuil on désactive un ou plusieurs convertisseurs et on augmente la sortie des autres convertisseurs afin d'améliorer le rendement total du dispositif, à puissance totale de conversion égale. Ceci se traduit par une discontinuité dans la puissance totale de conversion au moins dans la phase transitoire. Grâce à la gestion de la répartition de puissance par les positions des premier 31 et second 33 curseurs sur l'anneau 29, la diminution et l'augmentation du signal de sortie de chaque convertisseur 1 se fait progressivement. Le dispositif de conversion 27 ne voit pas une désactivation brusque de ses convertisseurs 1.

En outre, la rotation des portions de l'anneau 29 (ou, de façon équivalente, des axes Δ, β séparant les portions) permet d'améliorer la répartition de puissance et l'uniformisation d'utilisation des convertisseurs 1 lorsque la puissance totale de conversion reste constante. La rotation des portions de l'anneau 29 permet également une continuité de la puissance totale de conversion lorsque cette dernière reste constante et que l'on souhaite alterner l'utilisation des convertisseurs 1.

Le dispositif de conversion d'énergie 27 peut comprendre une unité de traitement configurée pour mettre en oeuvre le procédé selon l'invention.

Par exemple, l'unité de traitement comprend un module intégrant une représentation de l'anneau géométrique 29. En particulier, l'anneau 29 peut être stocké dans une mémoire sous forme de plusieurs intervalles angulaires correspondant chacun à un convertisseur 1 respectif. Les positions des premier 31 et second 33 curseurs peuvent correspondre à des valeurs angulaires respectives stockées dans une mémoire.

En outre, la répartition de puissance entre les convertisseurs 1 peut être représentée par l'anneau 29 sur une unité d'affichage afin d'informer un utilisateur du dispositif de conversion d'énergie 27.

## Revendications

1. Procédé de répartition de la puissance totale d'un dispositif de conversion d'énergie (27) entre au moins deux convertisseurs (1) compris dans ledit dispositif de conversion d'énergie (27),
la somme des puissances de conversion des convertisseurs (1) correspondant à la puissance totale du dispositif de conversion (27),
le dispositif de conversion d'énergie (27) réalisant une conversion d'énergie entre une première et une deuxième entités électriques et comprenant une unité de traitement configurée pour mettre en oeuvre le procédé,
**caractérisé en ce que** :
lesdits, au moins deux, convertisseurs (1) correspondent à au moins deux portions d'un anneau (29), ledit anneau (29) étant stocké dans une mémoire sous la forme d'une pluralité d'intervalles angulaires correspondant chacun à un convertisseur (1) respectif, les portions étant proportionnelles à une valeur de puissance prédéterminée de leur convertisseur (1) respectif, l'ensemble des, au moins deux, portions formant l'anneau (29) complet ; et **en ce que**
la puissance totale du dispositif de conversion correspond à un arc (100) de l'anneau (29) compris entre les positions d'un premier (31) et d'un deuxième (33) curseurs mobiles le long de l'anneau (29), lesdites positions du premier curseur (31) et du deuxième curseur (33) correspondant respectivement à des valeurs angulaires respectives stockées dans la mémoire, et
la répartition de puissance entre les convertisseurs (1) est définie par les positions du premier (31) et du deuxième (33) curseurs mobiles le long de l'anneau (29).

2. Procédé de répartition selon la revendication 1 dans lequel les positions desdits premier (31) et deuxième (33) curseurs mobiles sont ajustées de sorte que :
- lorsque la puissance totale du dispositif de conversion (27) augmente, le premier curseur mobile (31) se déplace dans un sens prédéfini le long de l'anneau (29) de manière proportionnelle à l'augmentation de puissance et,
- lorsque la puissance totale du dispositif de conversion (27) diminue, le deuxième curseur mobile (33) se déplace dans le sens prédéfini le long de l'anneau (29) de manière proportionnelle à la diminution de puissance.

3. Procédé de répartition selon la revendication 1 ou 2 dans lequel les positions des portions de l'anneau (29) peuvent être déplacées en rotation autour du centre de l'anneau (29), le déplacement des portions correspondant à une modification de la répartition de puissance entre les différents convertisseurs (1).

4. Procédé de répartition selon la revendication 3 dans lequel le déplacement en rotation des portions est réalisé de manière permanente.

5. Procédé de répartition selon la revendication 3 ou 4 dans lequel le déplacement en rotation des portions est fonction des caractéristiques de rendement des convertisseurs (1).

6. Procédé selon l'une des revendications 3 à 5 dans lequel la vitesse du déplacement en rotation des portions est fonction de la constante de temps thermique des convertisseurs.

7. Procédé de répartition selon l'une des revendications 1 à 6 dans lequel la vitesse du déplacement en rotation des portions est augmentée d'une première valeur de vitesse prédéfinie lorsque le rendement de conversion du dispositif de conversion (27) est inférieur à une première valeur de rendement prédéfinie.

8. Procédé de répartition selon l'une des revendications 1 à 7 dans lequel la vitesse du déplacement en rotation des portions est réduite d'une deuxième valeur de vitesse prédéfinie lorsque le rendement de conversion du dispositif de conversion (27) est supérieur à une deuxième valeur de rendement prédéfinie.

9. Dispositif de conversion d'énergie (27) entre une première et une deuxième entités électriques, le dispositif de conversion d'énergie (27) comprenant au moins deux convertisseurs (1) **caractérisé en ce qu'**il comprend également une unité de traitement configurée pour mettre en oeuvre un procédé de répartition de la puissance selon l'une des revendications 1 à 8, l'unité de traitement comprenant :
- un module intégrant une représentation d'un anneau géométrique (29), ledit anneau (29) étant stocké dans une mémoire sous la forme d'une pluralité d'intervalles angulaires correspondant chacun à un convertisseur (1) respectif, lesdits au moins deux convertisseurs (1) correspondant à au moins deux portions de l'anneau, les portions étant proportionnelles à une valeur de puissance prédéterminée de leur convertisseur (1) respectif, l'ensemble des, au moins deux, portions formant l'anneau complet ;
- une mémoire stockant les positions d'un premier (31) et d'un deuxième (33) curseurs mobiles le long de l'anneau (29), lesdites positions du premier curseur (31) et du deuxième curseur (33) correspondant respectivement à des valeurs angulaires respectives stockées dans la mémoire, la puissance totale du dispositif de conversion (27) correspondant à un arc (100) de l'anneau compris entre les positions du premier (31) et du deuxième (33) curseurs mobiles le long de l'anneau (29), et
- un module de répartition de la puissance entre les convertisseurs (1) définie par les positions du premier (31) et du deuxième (33) curseurs mobiles le long de l'anneau(29).

10. Dispositif de conversion d'énergie (27) selon la revendication 9 dans lequel lesdits, au moins deux, convertisseurs (1) comprennent :
- une première borne d'entrée (3) reliée d'une part à une première extrémité (5) d'une branche (7) comprenant deux interrupteurs (9) montés en série et d'autre part à une première borne de sortie (11), et
- une deuxième borne d'entrée (13) reliée au point milieu (15) de la branche (7) par l'intermédiaire d'un élément inductif (17), la deuxième extrémité (19) de la branche (7) correspondant à une deuxième borne de sortie (21),
les premières bornes d'entrée (3) des convertisseurs (1) étant reliées entre elles, les deuxièmes bornes d'entrée (13) des convertisseurs (1) étant reliées entre elles, les premières bornes de sortie (11) des convertisseurs (1) étant reliées entre elles, et les deuxièmes bornes de sortie (21) des convertisseurs (1) étant également reliées entre elles.

11. Dispositif de conversion d'énergie selon la revendication 10 dans lequel les interrupteurs (9) des convertisseurs (1) comprennent un transistor (23) monté en parallèle avec une diode (25).

## Patentansprüche

1. Verteilungsverfahren der Gesamtleistung einer Energieumwandlungs-Vorrichtung (27) zwischen wenigstens zwei Wandlern (1), die in der genannten Energieumwandlungs-Vorrichtung (27) inbegriffen sind,
wobei die Summe der Umwandlungsleistungen der Wandler (1) der Gesamtleistung der Umwandlungsvorrichtung (27) entspricht,
wobei die Energieumwandlungsvorrichtung (27) eine Energieumwandlung zwischen einer ersten und einer zweiten elektrischen Einheit realisiert und eine Verarbeitungseinheit umfasst, die zum Umsetzen des Verfahrens gestaltet ist,
**dadurch gekennzeichnet, dass**:
die genannten wenigstens zwei Wandler (1) wenigstens zwei Abschnitten eines Rings (29) entsprechen, wobei der genannte Ring (29) in einem Speicher in Form einer Vielzahl von ringförmigen Intervallen gespeichert ist, die jeweils einem jeweiligen Wandler (1) entsprechen, wobei die Abschnitte proportional zu einem vorbestimmten Leistungswert ihres jeweiligen Wandlers (1) sind, wobei die Gruppe der wenigstens zwei Abschnitte den kompletten Ring (29) bildet; und dass
die Gesamtleistung der Umwandlungsvorrichtung einem Bogen (100) des Rings (29) entspricht, der zwischen den Positionen eines ersten (31) und eines zweiten mobilen Cursors entlang des Rings (29) inbegriffen ist, wobei die genannten Positionen des ersten Cursors (31) und des zweiten Cursors (33) jeweils jeweiligen winkelförmigen Werten entsprechen, die im Speicher gespeichert sind; und
die Leistungsverteilung zwischen den Wandlern (1) durch die Positionen des ersten (31) und des zweiten (33) mobilen Cursors entlang des Rings (29) definiert ist.

2. Verteilungsverfahren gemäß Anspruch 1, bei dem die Positionen des genannten ersten (31) und zweiten (33) mobilen Cursors derart angepasst sind, dass:
- wenn die Gesamtleistung der Umwandlungsvorrichtung (27) steigt, sich der erste mobile Cursor (31) in einer vordefinierten Richtung entlang des Rings (29) proportional zur Leistungserhöhung verschiebt, und
- wenn die Gesamtleistung der Umwandlungsvorrichtung (27) abnimmt, sich der zweite mobile Cursor (33) in der vordefinierten Richtung entlang des Rings (29) proportional zur Leistungsabnahme verschiebt.

3. Verteilungsverfahren gemäß Anspruch 1 oder 2, bei dem die Positionen der Abschnitte des Rings (29) in Rotation um das Zentrum des Rings (29) verschoben sein können, wobei die Verschiebung der Abschnitte einer Änderung der Leistungsverteilung zwischen den verschiedenen Wandlern (1) entspricht.

4. Verteilungsverfahren gemäß Anspruch 3, bei dem die Verschiebung der Abschnitte in Rotation permanent realisiert ist.

5. Verteilungsverfahren gemäß Anspruch 3 oder 4, bei dem die Verschiebung der Abschnitte in Rotation von den Leistungsmerkmalen der Wandler (1) abhängt.

6. Verfahren gemäß einem der Ansprüche 3 bis 5, bei dem die Geschwindigkeit der Verschiebung der Abschnitte in Rotation von der thermischen Zeitkonstante der Wandler abhängt.

7. Verteilungsverfahren gemäß einem der Ansprüche 1 bis 6, bei dem die Geschwindigkeit der Verschiebung der Abschnitte in Rotation um einen ersten vordefinierten Geschwindigkeitswert erhöht ist, wenn die Umwandlungsleistung der Umwandlungsvorrichtung (27) unter einem ersten vordefinierten Leistungswert liegt.

8. Verteilungsverfahren gemäß einem der Ansprüche 1 bis 7, bei dem die Geschwindigkeit der Verschiebung der Abschnitte in Rotation um einen zweiten vordefinierten Geschwindigkeitswert gemindert ist, wenn die Umwandlungsleistung der Umwandlungsvorrichtung (27) höher ist als ein vordefinierter zweiter Leistungswert.

9. Energieumwandlungs-Vorrichtung (27) zwischen einer ersten und zweiten elektrischen Einheit, wobei die Energieumwandlungs-Vorrichtung (27) wenigstens zwei Wandler (1) umfasst, **dadurch gekennzeichnet, dass** sie ebenfalls eine Verarbeitungseinheit umfasst, die gestaltet ist, um ein Verteilungsverfahren der Leistung gemäß einem der Ansprüche 1 bis 8 umzusetzen, wobei die Verarbeitungseinheit umfasst:
- ein Modul, das eine Darstellung eines geometrischen Rings (29) integriert, wobei der genannte Ring (29) in einem Speicher in Form einer Vielzahl von winkelförmigen Intervallen gespeichert ist, die jeweils einem jeweiligen Wandler (1) entsprechen, wobei die genannten wenigstens zwei Wandler (1) wenigstens zwei Abschnitten des Rings entsprechen, wobei die Abschnitte proportional zu einem vorbestimmten Leistungswert ihres jeweiligen Wandlers (1) sind, wobei die Gruppe der wenigstens zwei Abschnitte den kompletten Ring bildet;
- einen Speicher, der die Positionen eines ersten (31) und eines zweiten (33) mobilen Cursors entlang des Rings (29) speichert, wobei die genannten Positionen des ersten Cursors (31) und des zweiten Cursors (33) jeweils jeweiligen winkelförmigen Werten entsprechen, die in dem Speicher gespeichert sind, wobei die Gesamtleistung der Umwandlungsvorrichtung (27) einem Bogen (100) des Rings entspricht, der zwischen den Positionen des ersten (31) und des zweiten (33) mobilen Cursors entlang des Rings (29) inbegriffen ist, und
- ein Verteilungsmodul der Leistung zwischen den Wandlern (1), die von den Positionen des ersten (31) und des zweiten (33) mobilen Cursors entlang des Rings (29) definiert ist.

10. Energieumwandlungs-Vorrichtung (27) gemäß Anspruch 9, bei der die genannten wenigstens zwei Wandler (1) umfassen:
- eine erste Eingangsklemme (3), die einerseits mit einem ersten Ende (5) eines Zweigs (7) verbunden ist, umfassend zwei Schalter (9), die in Serie geschaltet sind, und andererseits eine erste Ausgangsklemme (11), und
- eine zweite Eingangsklemme (13), die am Mittelpunkt (15) des Zweigs (7) mittels eines induktiven Elements (17) verbunden ist, wobei das zweite Ende (19) des Zweigs (7) einer zweiten Ausgangsklemme (21) entspricht,
wobei die ersten Eingangsklemmen (3) der Wandler (1) miteinander verbunden sind, wobei die zweiten Eingangsklemmen (13) der Wandler (1) miteinander verbunden sind, wobei die ersten Ausgangsklemmen (11) der Wandler (1) miteinander verbunden sind, und die zweiten Ausgangsklemmen (21) der Wandler (1) ebenfalls miteinander verbunden sind.

11. Energieumwandlungs-Vorrichtung gemäß Anspruch 10, bei dem die Schalter (9) der Wandler (1) einen Transistor (23) umfassen, der parallel zu einer Diode (25) montiert ist.

## Claims

1. A distribution method for distributing the total power of an energy conversion device (27) between at least two converters (1) comprised in said energy conversion device (27),
the sum of the conversion powers of the converters (1) corresponding to the total power of the conversion device (27),
the energy conversion device (27) performing an energy conversion between a first and a second electrical entities and comprising a processing unit configured to implement the method,
**characterised in that**:
said at least two converters (1) correspond to at least two portions of a ring (29), said ring (29) being stored in a memory as a plurality of angular intervals each corresponding to a respective converter (1), the portions being proportional to a predetermined power value of their respective converter (1), all of the at least two portions forming the full ring (29); and **in that**
the total power of the conversion device corresponds to an arc (100) of the ring (29) included between the positions of a first (31) and a second (33) movable sliders along the ring (29), said positions of the first slider (31) and the second slider (33) respectively corresponding to respective angular values stored in the memory, and
the power distribution between the converters (1) is defined by the positions of the first (31) and second (33) movable sliders along the ring (29).

2. The distribution method according to claim 1, wherein the positions of said first (31) and second (33) movable sliders are adjusted such that:
- when the total power of the conversion device (27) increases, the first movable slider (31) moves in a predefined direction along the ring (29) proportionally to the power increase and,
- when the total power of the conversion device (27) decreases, the second movable slider (33) moves in the predefined direction along the ring (29) proportionally to the power decrease.

3. The distribution method according to claim 1 or 2, wherein the positions of the portions of the ring (29) can be rotatably moved about the centre of the ring (29), the movement of the portions corresponding to a modification in the power distribution between the different converters (1).

4. The distribution method according to claim 3, wherein the rotational movement of the portions is made on an ongoing basis.

5. The distribution method according to claim 3 or 4, wherein the rotational movement of the portions is a function of the efficiency characteristics of the converters (1).

6. The method according to one of claims 3 to 5, wherein the rotational movement speed of the portions is a function of the thermal time constant of the converters.

7. The distribution method according to one of claims 1 to 6, wherein the rotational movement speed of the portions is increased by a first predefined speed value when the conversion efficiency of the conversion device (27) is lower than a first predefined efficiency value.

8. The distribution method according to one of claims 1 to 7, wherein the rotational movement speed of the portions is reduced by a second predefined speed value when the conversion efficiency of the conversion device (27) is higher than a second predefined efficiency value.

9. An energy conversion device (27) between a first and a second electrical entities, the energy conversion device (27) comprising at least two converters (1) **characterised in that** it also comprises a processing unit configured to implement a power distribution method according to one of claims 1 to 8, the processing unit comprising:
- a module integrating a representation of a geometrical ring (29), said ring (29) being stored in a memory as a plurality of angular intervals each corresponding to a respective converter (1), said at least two converters (1) corresponding to at least two portions of the ring, the portions being proportional to a predetermined power value of their respective converter (1), all of the at least two portions forming the full ring;
- a memory storing the positions of a first (31) and a second (33) movable sliders along the ring (29), said positions of the first slider (31) and the second slider (33) respectively corresponding to respective angular values stored in the memory, the total power of the conversion device (27) corresponding to an arc (100) of the ring included between the positions of the first (31) and second (33) movable sliders along the ring (29), and
- a power distribution module between the converters (1) defined by the positions of the first (31) and second (33) movable sliders along the ring (29).

10. The energy conversion device (27) according to claim 9, wherein said at least two converters (1) comprise:
- a first input terminal (3) connected on the one hand to a first end (5) of a branch (7) comprising two switches (9) connected in series and on the other hand to a first output terminal (11), and
- a second input terminal (13) connected to the middle point (15) of the branch (7) through an inductive element (17), the second end (19) of the branch (7) corresponding to a second output terminal (21),
the first input terminals (3) of the converters (1) being connected to each other, the second input terminals (13) of the converters (1) being connected to each other, the first output terminals (11) of the converters (1) being connected to each other, and the second output terminals (21) of the converters (1) being also connected to each other.

11. The energy conversion device according to claim 10, wherein the switches (9) of the converters (1) comprise a transistor (23) connected in parallel to a diode (25).
